# EUROPEAN PATENT APPLICATION

(11) **EP 3 981 623 A1**
(43) Date of publication of application: **13.04.2022**
(21) Application number: 20823557.2
(22) Date of filing: 09.06.2020
(51) Int. Cl.: B60H 1/34

(54) **AIR OUTLET AND VEHICLE COMPRISING SAME**

(30) Priority: 10.06.2019 CN 201910496360
(71) Applicant: Shanghai Yanfeng Jinqiao Automotive Trim Systems Co., Ltd., Shanghai 201206 (CN)
(72) Inventor: ZHANG, Junwei, Shanghai 200233 (CN)
(74) Representative: Trinks, Ole
(86) International application number: PCT/CN2020/095060
(87) International publication number: WO 2020/248966

(57) **Abstract**

An air outlet (A) and a vehicle comprising same. The air outlet (A) comprises a motor (60), the motor (60) comprising an output shaft (601); a one-way bearing (12), the one-way bearing (12) comprising an inner ring (121) and an outer ring (125), and the output shaft (601) being connected to the inner ring (121) or the outer ring (125); and an inner air guide device and an outer air guide device, the inner air guide device being connected to the inner ring (121) and the outer air guide device being connected to the outer ring (125), or the inner air guide device being connected to the outer ring (125) and the outer air guide device being connected to the inner ring (121). By virtue of rotation of the output shaft (601) in the forward and reverse directions, the motor (60) simultaneously drives both the inner air guide device and the outer air guide device by means of a one-way bearing (12), and drives both the inner air guide device or the outer air guide device separately by means of the one-way bearing (12). According to the air outlet (A), a single motor (60) is used to realize the linkage rotation of the inner and outer air guide devices and the independent rotation of the inner and outer air guide devices when the output shaft (601) rotates forward and backward; moreover, the angle relationship between the inner and outer air guide devices can be adjusted, and the inner and outer air guide devices can be positioned at any position.

## Description

### FIELD OF THE INVENTION

The present invention relates to a vehicle interior trim, and in particular to an air outlet.

### BACKGROUND

It is common knowledge that conventional air outlets of vehicles are generally provided inside with two rows of blades, namely horizontal blades and vertical blades, for controlling the air blowing direction of the air outlet. Previously, manual control was realized through the transmission structure inside the air outlet. At present, electric air outlets are increasingly applied due to progress in intelligent and electric technologies and higher sensory requirements of users for control.

However, two motors are generally designed for separate control of two rows of blades. Although the application of intelligent and electric technologies is constantly required, the cost pressure is always there since the cost of electric air outlets is much higher than that of the traditional manual ones. As a result, the probability of reducing the number of motors is frequently mentioned.

Therefore, a novel air outlet is desired.

### SUMMARY

In order to solve the above-mentioned problems in the prior art, the present invention aims to provide an air outlet for vehicle interior trim and a vehicle comprising the same, and thus two rows of blades of the air outlet can be driven by a single motor, wherein such functions as driving the two rows of blades simultaneously or separately and adjusting the position of any one blade separately can be realized.

According to one aspect of the present invention, provided is an air outlet, which comprises: a motor comprising an output shaft; a one-way bearing comprising an inner ring and an outer ring, the output shaft being coupled to either the inner ring or the outer ring; and an inner air guiding device and an outer air guiding device, the inner air guiding device being coupled to the inner ring and the outer air guiding device being coupled to the outer ring, or the inner air guiding device being coupled to the outer ring and the outer air guiding device being coupled to the inner ring; wherein by means of forward and reverse rotation of the output shaft, the motor drives the inner air guiding device and the outer lair guiding device simultaneously through the one-way bearing and drives the inner air guiding device or the outer air guiding device separately through the one-way bearing.

A one-way bearing is one that is free to rotate in one direction and locked in the other direction. One-way bearings are also known as overrunning clutches. The output shaft can be connected directly or indirectly to either the inner ring or the outer ring. The inner air guiding device is an air guiding device that is close to an inner side of the air outlet, and the outer air guiding device is an air guiding device that is close to an outer side of the air outlet. The outer air guiding device is closer to the space in the vehicle than the inner air guiding device. One of the inner and outer air guiding devices can vertically control the direction of airflow, and the other can horizontally control the direction of airflow. In some embodiments, the inner air guiding device may be an inner blade, for example, a vertical blade, to horizontally control the direction of airflow. In some embodiments, the outer air guiding device may be an outer blade, for example, a horizontal blade, to vertically control the direction of airflow. In some embodiments, the inner air guiding device may be a horizontal blade, and the outer air guiding device may be a vertical blade. The inner air guiding device can be connected directly or indirectly to either the inner ring or the outer ring of the one-way bearing. The outer air guiding device can be connected directly or indirectly to either the outer ring or the inner ring of the one-way bearing. The output shaft of the motor may rotate in forward and reverse directions, for example, in clockwise and counterclockwise directions. When the output shaft of the motor rotates in one direction, the inner air guiding device and the outer air guiding device are driven to rotate simultaneously through the one-way bearing, and when the output shaft of the motor rotates in the other direction, the inner air guiding device or the outer air guiding device is driven to rotate separately through the one-way bearing. Therefore, in the air outlet, a single motor is used to drive the inner air guiding device and the outer air guiding device to rotate simultaneously or separately when the output shaft rotates forward and reversely, the angle between the inner air guiding device and the outer air guiding device can be adjusted, and the inner air guiding device or the outer air guiding device can be positioned at will.

In an optional embodiment, the air outlet comprises an inner air guiding device transmission mechanism and an outer air guiding device transmission mechanism, the inner air guiding device being coupled to the inner ring through the inner air guiding device transmission mechanism, and the outer air guiding device being coupled to the outer ring through the outer air guiding device transmission mechanism.

By providing the inner air guiding device transmission mechanism and the outer air guiding device transmission mechanism, the inner air guiding device can be coupled to the inner ring, and the outer air guiding device can be coupled to the outer ring.

In an optional embodiment, the inner air guiding device transmission mechanism comprises an inner air guiding device connecting rod coupled to a rotating shaft of the inner air guiding device.

By providing the inner air guiding device connecting rod, the inner air guiding device can rotate around its rotating shaft along with the movement of the inner air guiding device connecting rod. The inner air guiding device may comprise a plurality of air guiding devices, and in this case, the plurality of air guiding devices can simultaneously rotate around their respective rotating shafts along with the movement of the inner air guiding device connecting rod. The inner air guiding device connecting rod may be connected directly or indirectly to the inner ring of the one-way bearing so as to be driven by the inner ring of the one-way bearing.

In an optional embodiment, the inner air guiding device transmission mechanism comprises a connecting rod, one end of the connecting rod being coupled to the inner air guiding device, and the other end of the connecting rod being coupled to the inner ring. In some embodiments, one end of the connecting rod is provided with a first connecting rod rotating shaft, and the other end of the connecting rod is provided with a second connecting rod rotating shaft. The connecting rod is connected to the inner air guiding device connecting rod through the first connecting rod rotating shaft and coupled to the inner ring through the second connecting rod rotating shaft.

By providing the connecting rod, the rotation of the inner ring of the one-way bearing can be converted into the translational movement of the inner air guiding device connecting rod.

In an optional embodiment, the inner air guiding device transmission mechanism further comprises a central shaft, wherein the central shaft is connected to the inner ring for synchronous rotation, or the central shaft and the inner ring are integrated into one part, and the other end of the connecting rod is eccentrically connected to the central shaft. In some embodiments, the connecting rod is eccentrically connected to the central shaft through the second connecting rod rotating shaft.

By providing the central shaft connected to the inner ring, the coupling of the connecting rod and the inner ring can be facilitated.

In an optional embodiment, the output shaft is coupled to the central shaft.

By the coupling of the output shaft and the central shaft, the power transmission from the motor to the inner air guiding device through the central shaft can be facilitated.

In an optional embodiment, the outer air guiding device transmission mechanism comprises an outer air guiding device connecting rod coupled to a rotating shaft of the outer air guiding device.

By providing the outer air guiding device connecting rod, the outer air guiding device can rotate around its rotating shaft along with the movement of the outer air guiding device connecting rod. The outer air guiding device can comprise a plurality of air guiding devices, and in this case, the plurality of air guiding devices can simultaneously rotate around their respective rotating shafts along with the movement of the outer air guiding device connecting rod. The outer air guiding device connecting rod can be connected directly or indirectly to the outer ring of the one-way bearing so as to be driven by the outer ring of the one-way bearing.

In an optional embodiment, the outer air guiding device transmission mechanism comprises a transmission rod, one end of the transmission rod being coupled to the outer air guiding device, and the other end of the transmission rod being coupled to the outer ring. In some embodiments, the transmission rod is further provided with a transmission rod rotating shaft, one end of the transmission rod being coupled to the outer air guiding device connecting rod.

By providing the transmission rod, the translational movement of the outer air guiding device connecting rod is achieved along with the rotation of the transmission rod around the transmission rod rotating shaft.

In an optional embodiment, the transmission rod is further provided with a protrusion, and the outer air guiding device transmission mechanism further comprises a spiral cam provided with a spiral groove, wherein the spiral cam is connected to the outer ring for synchronous rotation, or the spiral cam and the outer ring are integrated into one part, and the protrusion is fit for moving in the spiral groove.

By the matching of the protrusion arranged on the transmission rod and the spiral groove of the spiral cam arranged outside the outer ring, the protrusion moves in the vertical direction along with the rotation of the outer ring, which drives the transmission rod to rotate around the transmission rod rotating shaft, thereby achieving the translational movement of the outer air guiding device connecting rod and the rotation of the outer air guiding device around its rotating shaft.
In an optional embodiment, the output shaft is coupled to the inner ring through a gear set.

By providing the gear set, the gear ratio can be adjusted, which is favorable to the adjustment of power output of the output shaft to the inner ring.

In an optional embodiment, the air outlet comprises a housing provided inside with the inner air guiding device and the outer air guiding device.

The housing provided can be useful for forming flow channels in the inner air guiding device and the outer air guiding device, and can also protect the inner air guiding device and the outer air guiding device from inappropriate operation caused by direct contact made by a user with the inner air guiding device and the outer air guiding device.

In an optional embodiment, the inner air guiding device is a blade, a roller or a moving block, and the outer air guiding device is a blade, a roller or a moving block.

The inner air guiding device may be a blade, a roller or a moving block, and the outer air guiding device may also be a blade, a roller or a moving block. The inner and outer air guiding devices may be combined at will. For example, the inner and outer air guiding devices are a combination of blades, a combination of a blade and a roller, or a combination of a moving block and a blade.

In an optional embodiment, the outer air guiding device is a set of outer blades comprising two outer blades arranged in parallel, and each of the outer blades comprises two blades hinged to each other.

Airflow can flow through a flow channel formed between two layers of outer air guiding devices. Because each layer of the outer air guiding device comprises two blades hinged to each other, flow channels with different orientations can be formed by rotating one of the blades, so that airflow in different directions are obtained. By adopting such outer air guiding devices, the size of the air outlet can be reduced, and the space occupied by the air outlet on the dashboard of a vehicle is saved.

According to another aspect of the present invention, provided is a vehicle comprising the air outlet described above.

In the air outlet according to the present invention, a single motor is used to drive the inner air guiding device and the outer air guiding device to rotate simultaneously or separately when the output shaft rotates forward and reversely, the angle between the inner air guiding device and the outer air guiding device can be adjusted, and the inner air guiding device or the outer air guiding device can be positioned at will.

In the following detailed description of preferred embodiments with reference to the accompanying drawings, the above-mentioned advantages and other advantages and characteristics will be easily appreciated.

### BRIEF DESCRIPTION OF DRAWINGS

For a more complete understanding of the present invention, reference should now be made to the embodiments illustrated in greater detail in the accompanying drawings and described below by way of examples of the present invention, wherein:
FIG. 1A is a schematic view of a vehicle comprising an air outlet according to a preferred embodiment of the present invention;
FIG. 1B is an interior schematic perspective view of the vehicle in FIG. 1A;
FIG. 1C is a perspective view of the air outlet in FIG. 1B with a housing removed;
FIG. 2A is a perspective view of the air outlet in FIG. 1C blowing rightward;
FIG. 2B is a perspective view of the air outlet in FIG. 1C blowing leftward;
FIG. 2C is a perspective view of the air outlet in FIG. 1C blowing downward;
FIG. 2D is a perspective view of the air outlet in FIG. 1C blowing upward;
FIG. 3 is an exploded perspective view of the air outlet assembly in FIG. 1C;
FIG. 4A is a perspective view of an outer blade driving component of the air outlet in FIG. 2C blowing downward;
FIG. 4B is a top view of FIG. 4A;
FIG. 4C is a schematic cross-sectional view taken along line D-D in FIG. 4B;
FIG. 4D is a right view of FIG. 4A;
FIG. 5A is a perspective view of the outer blade driving component of the air outlet in FIG. 2D blowing upward;
FIG. 5B is a top view of FIG. 5A;
FIG. 5C is a schematic cross-sectional view taken along line E-E of FIG. 5B;
FIG. 5D is a right view of FIG. 5A;
FIG. 6A is a perspective view of an inner blade driving component of the air outlet in FIG. 2B blowing leftward;
FIG. 6B is a top view of FIG. 6A;
FIG. 6C is a front view of FIG. 6A;
FIG. 6D is a bottom view of FIG. 6A;
FIG. 7A is a perspective view of the inner blade driving component of the air outlet in FIG. 2A blowing rightward;
FIG. 7B is a top view of FIG. 7A;
FIG. 7C is a front view of FIG. 7A;
FIG. 7D is a bottom view of FIG. 7A;
FIG. 8A is a schematic view of the three-dimensional structure of the vehicle of
FIG. 1A;

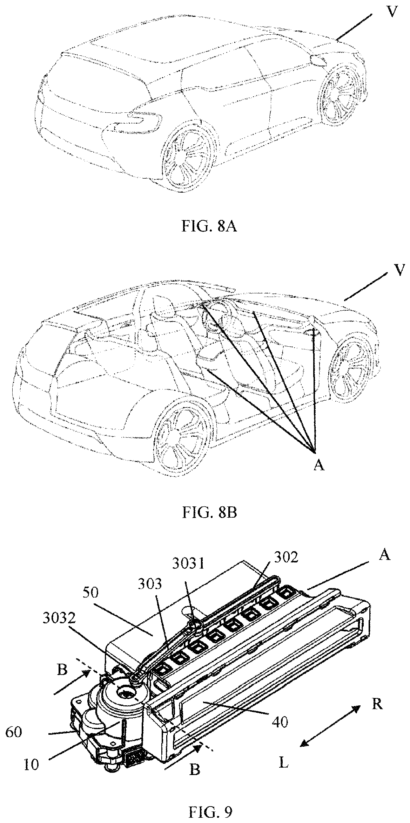

FIG. 8B is a partial cross-sectional view of FIG. 8A, showing a schematic view of the position of the air outlet according to an embodiment of the present invention in the vehicle;

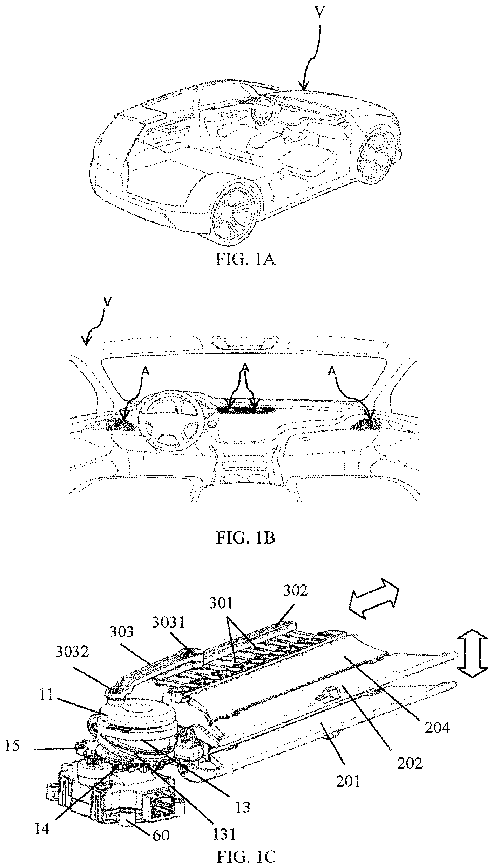

FIG. 9 is a perspective view of the air outlet of FIG. 1C;

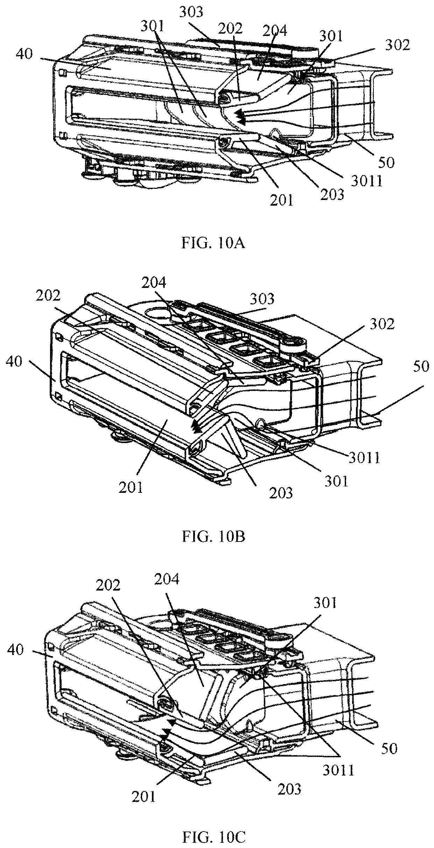

FIG. 10A is a perspective view of the air outlet of FIG. 9 with the horizontal blades in the intermediate position and the vertical blades in the left extreme position;
FIG. 10B is a perspective view of the air outlet of FIG. 9 with the horizontal blades in the upper extreme position and the vertical blades in the intermediate position;
FIG. 10C is a perspective view of the air outlet of FIG. 9 with the horizontal blades in the lower extreme position and the vertical blades in the right extreme position;

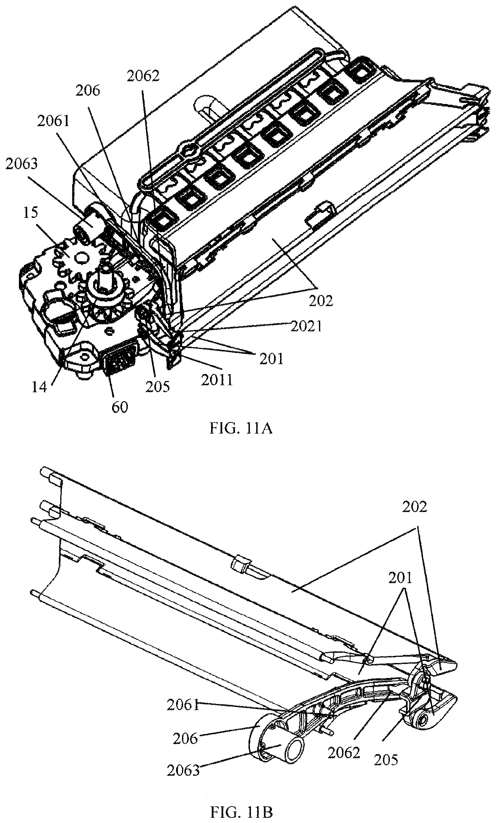

FIG. 11A is an front upper schematic view of the structures of some parts of the air outlet of FIG. 9;
FIG. 11B is a schematic view showing the connection of the horizontal blades and the transmission rod of the air outlet of FIG. 9;

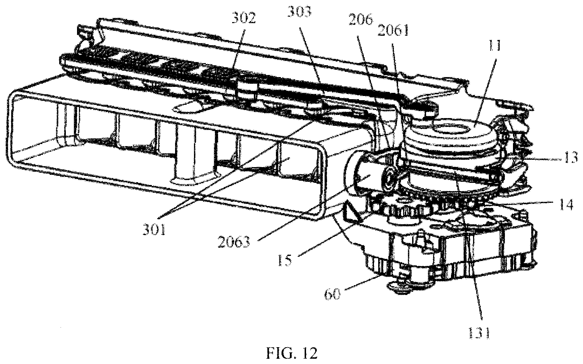

FIG. 12 is a rear schematic view of the structures of some parts of the air outlet of FIG. 9;

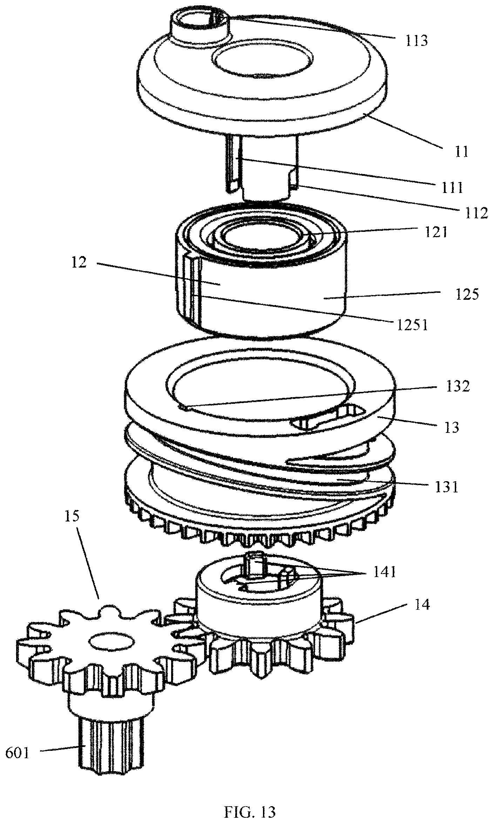

FIG. 13 is an exploded view of some parts of the air outlet of FIG. 9;

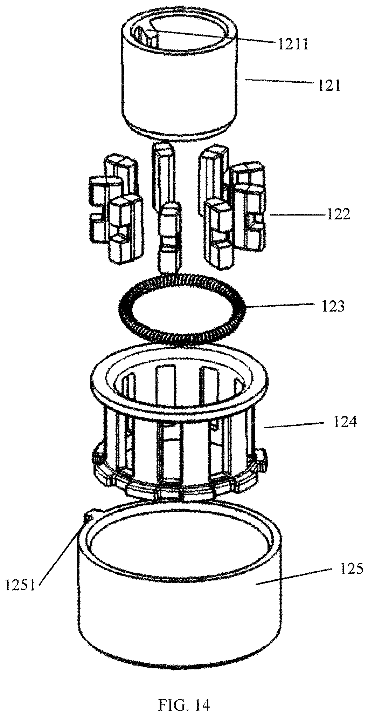

FIG. 14 is an exploded view of the one-way bearing of the air outlet of FIG. 9;

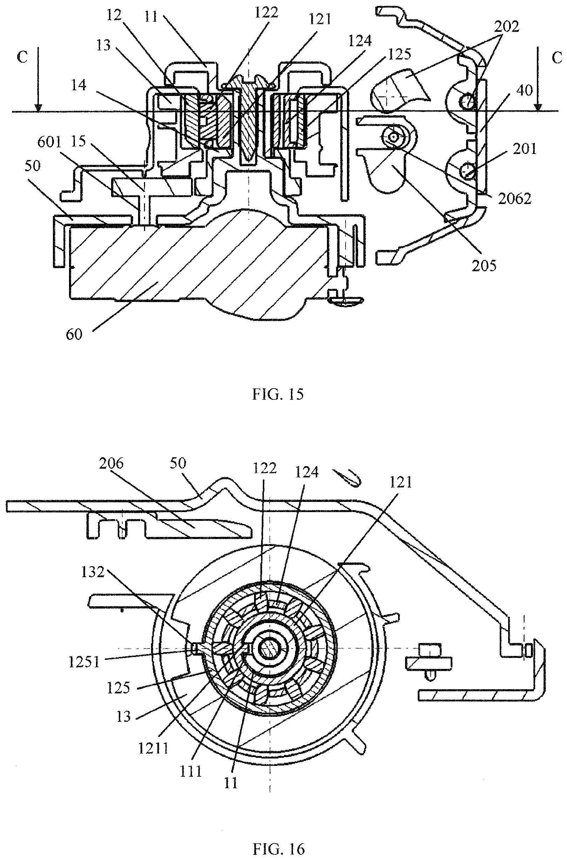

FIG. 15 is a schematic view of section B-B taken along the section position shown in FIG. 9; and
FIG. 16 is a schematic view of section C-C taken along the section position shown in FIG. 15.

### DETAILED DESCRIPTION

As one of ordinary skill in the art will appreciate, various characteristics of the embodiments illustrated and described with reference to any one of the accompanying drawings may be combined with characteristics illustrated in one or more other accompanying drawings to produce other embodiments that are not explicitly illustrated or described. The combination of the characteristics shown provides a representative embodiment for typical application. However, various combinations and modifications of the characteristics consistent with the teachings disclosed herein may be desired for particular application or implementation.

In the present specification, the directional terms such as "upper", "lower", "left", and "right" are used for convenience of description, and are not restrictive.

As shown in FIGs. 1A, 1B, 8A and 8B, a vehicle V comprises an interior having a dashboard, and air outlets A according to a preferred embodiment of the present invention are arranged in the center of and on both sides of the dashboard and on the rear side of a console. It should be understood that the air outlet A may be arranged only in the center of the dashboard, or arranged in any other position as needed.

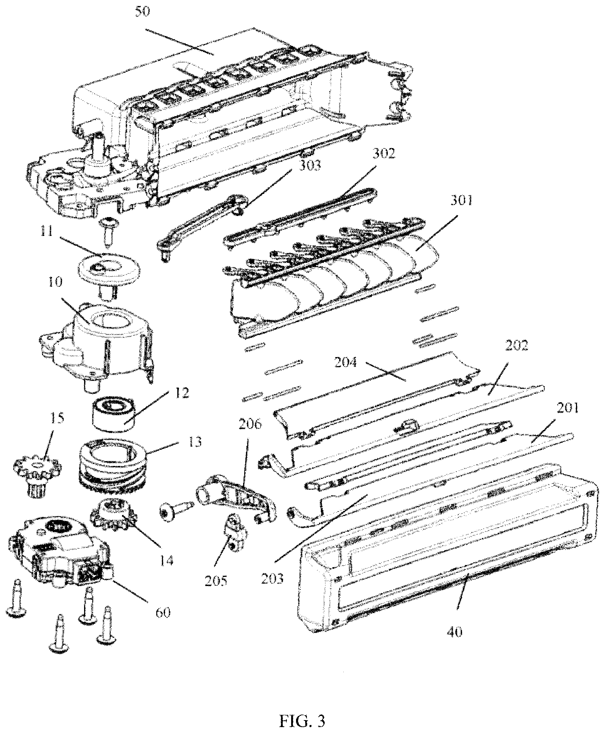

As shown in FIGs. 1C, 3 and 9, in this embodiment, a one-way bearing component 10 is mounted on the left side L of the air outlet A, the same side of a motor 60. The motor 60 comprises an output shaft 601 (see FIG. 13). The air outlet A further comprises inner blades and outer blades. In this embodiment, the inner blades are vertical blades, and the outer blades are horizontal blades. The air outlet further comprises an inner blade transmission mechanism and an outer blade transmission mechanism. The air outlet further comprises a housing provided inside with the inner blades and the outer blades and comprising a front cover 40 and a rear cover 50. As can be seen from FIG. 14, a one-way bearing 12 comprises an inner ring 121 and an outer ring 125, and as can be seen from FIG. 13, the inner ring 121 and a central shaft 11 are fitted together through an inner shaft key 1211 and a key groove 111 for synchronous rotation; the outer ring 125 and a spiral cam 13 are fitted together through a key 1251 and a key groove 132 for synchronous rotation; an output shaft 601 and a motor output gear 15 are integrated into one part, which is engaged with a transmission gear 14 through the motor output gear 15, and the transmission gear 14 is connected to the central shaft 11, so that the motor can drive the inner ring 121. The vertical blades are connected to the central shaft 11 through a connecting rod and are thus driven by the rotation of the inner ring 121, and the horizontal blades are connected to the spiral cam 13 through a connecting rod and are thus driven by the rotation of the outer ring 125. By means of forward and reverse rotation of the output shaft 601, the motor 60 either drives the vertical blades and the horizontal blades simultaneously through the one-way bearing component 10 or drives the vertical blades alone through the one-way bearing component 10. In this embodiment, in the air outlet, the motor 60 can drive the vertical blades alone for reciprocating rotation, the vertical blades and the horizontal blades can be driven for simultaneous rotation, the angle between the vertical blades and the horizontal blades can be adjusted, and the horizontal blades or the vertical blades can be positioned at will. Of course, if the structures of parts are simply changed, for example, the motor output gear 15 drives the spiral cam 13 instead of the central shaft 11, the horizontal blades can be controlled alone for reciprocating rotation in a vertical direction, and the horizontal blades and the vertical blades can be controlled for simultaneous rotation.

As shown in FIGs. 10A, 10B and 10C, the horizontal blades comprise two layers of horizontal blades arranged in parallel, and each layer of horizontal blade comprises two blades hinged to each other. Lower horizontal blades comprise a first horizontal lower blade 201 and a second horizontal lower blade 203. Upper horizontal blades comprise a first horizontal upper blade 202 and a second horizontal upper blade 204. By the rotation of the first horizontal lower blade 201 and the first horizontal upper blade 202, the second horizontal lower blade 203 and the second horizontal upper blade 204 are driven for movement so as to control the air blowing angle in the vertical direction, while the air blowing angle in the horizontal direction is changed by the rotation of a plurality of vertical blades 301 around their respective rotating shafts. It should be understood that instead of being structured as in the above-mentioned illustrated embodiment, the horizontal blades may have the structure of a blade set, i.e., a structure similar to that of the vertical blades in the illustrated embodiment.

With reference to FIGs. 9 and 12, it can be seen that the air outlet of this embodiment couples the vertical blades 301 and the one-way bearing component 10 (or more specifically, the inner ring 121 of the one-way bearing 12) together through the inner blade transmission mechanism. Specifically, the inner blade transmission mechanism comprises an inner blade connecting rod 302 connected to a rotating shaft 3011 of the vertical blades 301. The inner blade transmission mechanism further comprises a connecting rod 303, wherein one end of the connecting rod 303 is provided with a first connecting rod rotating shaft 3031, the other end of the connecting rod is provided with a second connecting rod rotating shaft 3032, the connecting rod 303 is connected to the inner blade connecting rod 302 through the first connecting rod rotating shaft 3031 and connected to the central shaft 11 through the second connecting rod rotating shaft 3032, and the drive connection with the inner ring 121 is achieved through the central shaft 11. Thus, a typical four-connecting rod reciprocating mechanism is formed, that is, a plurality of vertical blades 301 can rotate from side to side around their respective rotating shafts 3011 at a fixed angle for one cycle by rotation of the inner ring 121 of the one-way bearing 10 around its central shaft for one circle.

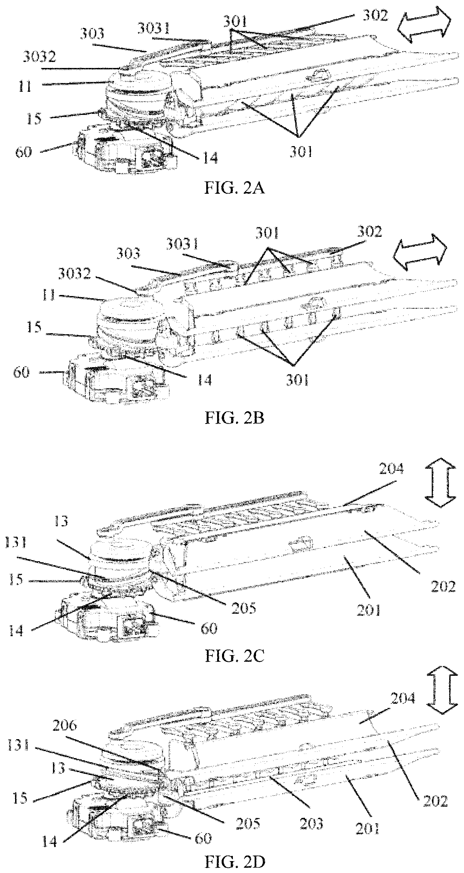

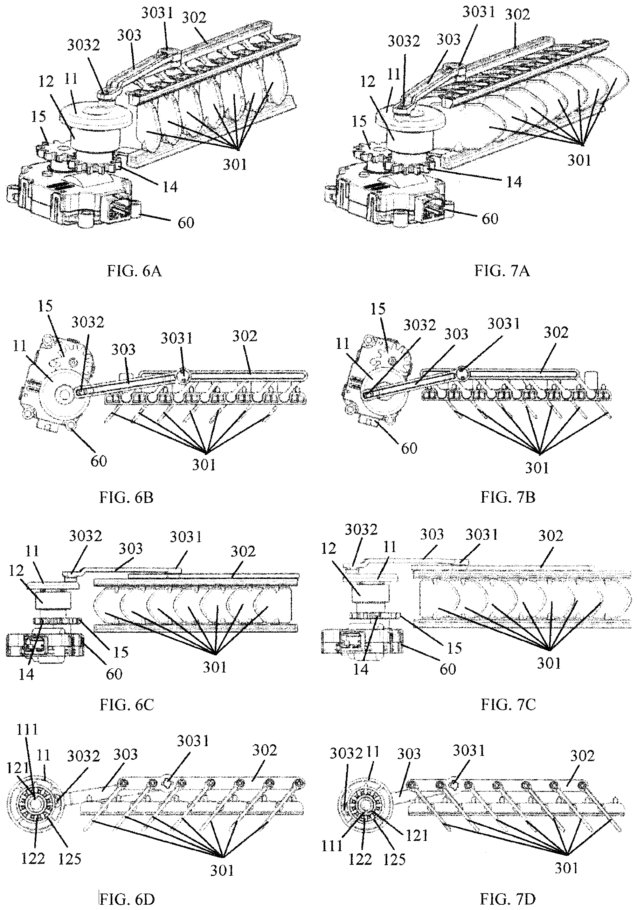

As shown in FIGs. 2A, 7A and 7D, when the inner blade driving component of the air outlet blows rightward, the motor output gear 15 drives the central shaft 11 to rotate through the transmission gear 14, so as to drive the second connecting rod rotating shaft 3032 of the connecting rod 303 to rotate to the left, and therefore the inner blade connecting rod 302 is pulled to the left, thus driving the inner blades 301 to deflect to the right.

As shown in FIGs. 2B, 6A and 6D, when the inner blade driving component of the air outlet blows leftward, the motor output gear 15 drives the central shaft 11 to rotate through the transmission gear 14, so as to drive the second connecting rod rotating shaft 3032 of the connecting rod 303 to rotate to the right, and therefore the inner blade connecting rod 302 is pulled to the right, thus driving the inner blades 301 to deflect to the left.

With reference to FIGs. 11A and 11B, it can be seen that the air outlet of this embodiment couples the horizontal blades and the one-way bearing component 10 (or more specifically, the outer ring 125 of the one-way bearing 12) together through the outer blade transmission mechanism. Specifically, the outer blade transmission mechanism comprises an outer blade connecting rod 205 coupled to the horizontal blades. The outer blade transmission mechanism further comprises a transmission rod 206, one end of the transmission rod 206 being coupled to the outer blade connecting rod 205, and the other end of the transmission rod 206 being coupled to the outer ring 125. The transmission rod 206 is provided with a transmission rod rotating shaft 2063. The transmission rod 206 is further provided with a protrusion 2061, and the outer blade transmission mechanism further comprises a spiral cam 13 provided with a spiral groove 131, wherein the protrusion 2061 is fit for moving in the spiral groove 131, the spiral cam 13 is fitted with the outer ring 125 for synchronous rotation, and the transmission rod 206 is driven to rotate around the transmission rod rotating shaft 2063 in a reciprocating manner. When the spiral cam 13 rotates around the central shaft of the one-way bearing 12, the air outlet fixes the first horizontal lower blade 201 and the first horizontal upper blade 202 together through the outer blade connecting rod 205, so that the first horizontal lower blade 201 and the first horizontal upper blade 202 can rotate around their respective rotating shafts 2011 and 2021, and meanwhile, the first horizontal lower blade 201 and the first horizontal upper blade 202 are parallel or maintain a specific range of angle change. The first horizontal lower blade 201 and the first horizontal upper blade 202 can be driven to rotate as long as the outer blade connecting rod 205 is driven to move up and down vertically. In this case, a shaft pin 2062 of the transmission rod 206 is fitted on the outer blade connecting rod 205, and when the transmission rod 206 rotates around the transmission rod rotating shaft 2063, the outer blade connecting rod 205 can be driven to move in the vertical direction, thereby driving the first horizontal lower blade 201 and the first horizontal upper blade 202 to rotate. The rotation of the spiral groove 131 of the spiral cam 13 around its central shaft for one circle corresponds to one cycle of the transmission rod 206 rotating up and down around the transmission rod rotating shaft 2063 at a fixed angle, and one cycle of the horizontal blades rotating up and down. The above is the description of the transmission between the horizontal blades and the one-way bearing component and between the vertical blades and the one-way bearing component in the air outlet. The typical four-connecting rod reciprocating mechanism and the reciprocating mechanism of the spiral cam and the transmission rod are mainly used, so that the main driving components drive the followers to reciprocate by rotating around their own central shaft.

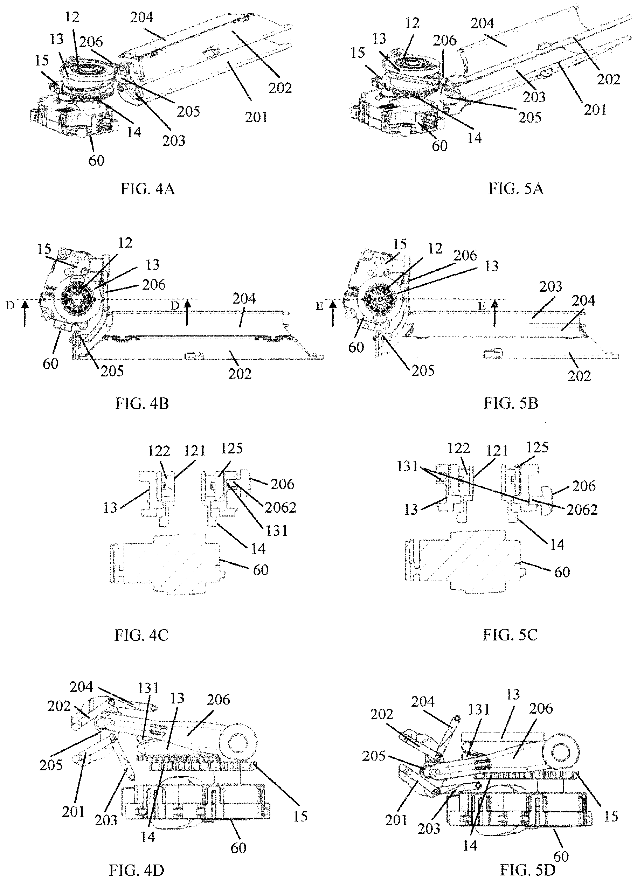

As shown in FIGs. 2C, 4A and 4D, when the inner blade driving component of the air outlet blows downward, the central shaft 11 drives the one-way bearing 12 and the spiral cam 13 to rotate, so that the left side of the spiral groove 131 rotates to the lowest point, and the right side rotates to the highest point, and therefore the transmission rod 206 swings upward to the highest point, and the transmission rod 206 drives the outer blade connecting rod 205 to move to the highest point, so as to drive the first horizontal lower blade 201 and the first horizontal upper blade 202 to deflect downward.

As shown in FIGs. 2D, 5A and 5D, when the inner blade driving component of the air outlet blows upward, the central shaft 11 drives the one-way bearing 12 and the spiral cam 13 to rotate, so that the left side of the spiral groove 131 rotates to the highest point, and the right side rotates to the lowest point, and therefore the transmission rod 206 swings downward to the lowest point, and the transmission rod 206 drives the outer blade connecting rod 205 to move to the lowest point, so as to drive the first horizontal lower blade 201 and the first horizontal upper blade 202 to deflect upward.

Described below is the one-way bearing component 10 of this embodiment, which is coupled to the horizontal blades and the vertical blades through the inner blade transmission mechanism and the outer blade transmission mechanism, so as to realize a rotation input, i.e., a forward and backward rotation of a motor, to drive two sets of functional movement components.

As shown in FIG. 13, the one-way bearing component 10 is provided with the central shaft 11, the one-way bearing 12, the spiral cam 13, the central shaft driving gear 14 and the motor output gear 15 mounted on the output shaft 601. As required, the motor output gear 15 may not be provided, and the central shaft driving gear 14 may be directly used as the output power part of the motor, depending on the transmission performance requirements of the component.

The illustrated one-way bearing 12 is a modified version of an FE wedge-type one-way bearing, and other types of one-way bearings may be used to realize stepless transmission. As shown in FIG. 7, the one-way bearing 12 comprises the inner ring 121, brake wedges 122, a spring coil 123, a cage 124, and the outer ring 125. The brake wedges 122 are circumferentially arranged between the inner ring 121 and the outer ring 125 through the cage 124. When the central shaft 11 rotates counterclockwise, the brake wedges 122 slip and do not rotate; when the central shaft 11 rotates clockwise, the brake wedges 122 are engaged to lock the relative movement of the inner ring 121 to the outer ring 125, thereby driving the spiral cam 13 to rotate clockwise.

The central shaft 11 comprises a through hole 113 fitted with the connecting rod 303, wherein the connecting rod 303 is eccentrically connected to the through hole 113 of the central shaft 11 through the second connecting rod rotating shaft 3032, so as to ensure that the connecting rod 303 can rotate around the through hole 113 without being separated from the central shaft 11. The central shaft 11 further comprises the key groove 111 and a key groove 112, wherein the key groove 111 is matched with the inner shaft key 1211 on the inner ring 121 to connect the central shaft and the inner ring, ensuring synchronous rotation of the inner ring 121 and the central shaft 11; the central shaft 11 and the inner ring 121 can also be integrated into one part, and the key groove 112 is matched with a key 141 on the central shaft driving gear 14, ensuring synchronous rotation of the central shaft 11 and the central shaft driving gear 14.

The spiral cam 13 is similar to a circular column; the outer cylindrical surface is designed with the spiral groove 131 matched with the protrusion 2061 on the transmission rod 206, so that the rotation of the spiral cam 13 can drive the transmission rod 206 to rotate up and down in a reciprocating manner; the inner cylindrical ring is designed with the key groove 132 matched with the shaft key 1251 on the outer ring 125, so that the synchronous rotation of the spiral cam 13 and the outer ring 125 is ensured, and the spiral cam 13 and the outer ring 125 can also be integrated into one part.

The central shaft driving gear 14 is engaged with the motor output gear 15, which can transmit the motor power output by the output shaft 601 to the one-way bearing 12. In some embodiments, the output shaft may be directly coupled to the central shaft in the case where the motor output gear 15 may not be provided.

The running process of the air outlet of this embodiment is described below.

As shown in FIG. 15, the motor 60 outputs power through the motor output gear 15 mounted on the output shaft 601, and the power is transmitted to the central shaft 11 through the central shaft driving gear 14. Since the rotation of the central shaft 11 can drive the vertical blades 301, the motor 60 can drive the vertical blades 301 to rotate in a reciprocating manner by means of forward and backward rotation. The rotary power transmitted to the central shaft 11 by the motor can also be transmitted to the spiral cam 13 through the wedge-type one-way bearing 12, so that the horizontal blades can be driven to rotate in a reciprocating manner through the spiral cam 13. However, according to the principle of the wedge-type one-way bearing, the power can only be transmitted by unidirectional rotation. As shown in FIG. 16, when the central shaft 11 rotates clockwise around its central shaft, the synchronous rotation principle of the wedge-type one-way bearing is involved, and in this case, the brake wedges 122 can be driven, and then the outer ring 125 and the spiral cam 13 can be driven to rotate; when the central shaft 11 rotates counterclockwise around its central shaft, the idle rotation principle of the wedge-type one-way bearing is involved, and in this case, the brake wedges and the spiral cam 13 cannot be driven to rotate together. That is, when the central shaft 11 is driven to rotate clockwise by the motor 60, the motor can simultaneously control the horizontal blades and the vertical blades to synchronously rotate in a reciprocating manner, and when the central shaft 11 is driven to rotate counterclockwise by the motor 60, the motor can only control the vertical blades to rotate in a reciprocating manner. Therefore, when the horizontal blades and the vertical blades need to be adjusted to satisfactory positions respectively, or when the travel angle position relationship between them needs to be adjusted, what needs to be done is just to simultaneously adjust the angles of the vertical blades and the horizontal blades first, allow the motor to rotate reversely once the angle of the horizontal blades is adjusted to a satisfactory position, and then adjust the angle of the vertical blades alone to a satisfactory position, so that both the horizontal blades and the vertical blades reach the satisfactory positions, and if the horizontal blades and the vertical blades are required to automatically sweep air in such a mutual position relationship, the motor is required to be rotated forward for driving theses blades.

If the initial design requirement is that the single motor can drive and control the horizontal blades alone and can drive the horizontal blades and the vertical blades simultaneously, only the structure is required to be modified, that is, the rotary power of the motor is output to the spiral cam directly or through the gear, and then is unidirectionally transmitted by the spiral cam to the inner ring through the one-way bearing.

It should be understood that the inner air guiding device and the outer air guiding device, although being described above as the horizontal blades and the vertical blades, may also be in the form of a moving block or a roller, and may be combined at will. For example, the inner and outer air guiding devices are a combination of blades, a combination of a blade and a roller, or a combination of a moving block and a blade.

One skilled in the art will readily recognize, from such discussion and the accompanying drawings and claims, that various changes, modifications and variations can be made therein without departing from the true spirit and fair scope of the present invention defined by the following claims.

## Claims

1. An air outlet, comprising:
- a motor comprising an output shaft;
- a one-way bearing comprising an inner ring and an outer ring, the output shaft being coupled to either the inner ring or the outer ring; and
- an inner air guiding device and an outer air guiding device, the inner air guiding device being coupled to the inner ring and the outer air guiding device being coupled to the outer ring, or the inner air guiding device being coupled to the outer ring and the outer air guiding device being coupled to the inner ring;
wherein by means of forward and reverse rotation of the output shaft, the motor drives the inner air guiding device and the outer air guiding device simultaneously through the one-way bearing and drives the inner air guiding device or the outer air guiding device separately through the one-way bearing.

2. The air outlet according to claim 1, wherein the air outlet comprises an inner air guiding device transmission mechanism and an outer air guiding device transmission mechanism, the inner air guiding device being coupled to the inner ring through the inner air guiding device transmission mechanism, and the outer air guiding device being coupled to the outer ring through the outer air guiding device transmission mechanism.

3. The air outlet according to claim 2, wherein the inner air guiding device transmission mechanism comprises a connecting rod, one end of the connecting rod being coupled to the inner air guiding device, and the other end of the connecting rod being coupled to the inner ring.

4. The air outlet according to claim 3, wherein the inner air guiding device transmission mechanism further comprises a central shaft, wherein the central shaft is connected to the inner ring for synchronous rotation, or the central shaft and the inner ring are integrated into one part, and the other end of the connecting rod is eccentrically connected to the central shaft.

5. The air outlet according to claim 4, wherein the output shaft is coupled to the central shaft.

6. The air outlet according to claim 2, wherein the outer air guiding device transmission mechanism comprises a transmission rod, one end of the transmission rod being coupled to the outer air guiding device, and the other end of the transmission rod being coupled to the outer ring.

7. The air outlet according to claim 6, wherein the transmission rod is further provided with a protrusion, and the outer air guiding device transmission mechanism further comprises a spiral cam provided with a spiral groove, wherein the spiral cam is connected to the outer ring for synchronous rotation, or the spiral cam and the outer ring are integrated into one part, and the protrusion is fit for moving in the spiral groove.

8. The air outlet according to claim 1, wherein the output shaft is coupled to the inner ring through a gear set.

9. The air outlet according to any one of claims 1 to 8, wherein the inner air guiding device is a blade, a roller or a moving block, and the outer air guiding device is a blade, a roller or a moving block.

10. The air outlet according to claim 1, wherein the outer air guiding device is a set of outer blades comprising two outer blades arranged in parallel, and each of the outer blades comprises two blades hinged to each other.

11. A vehicle, comprising the air outlet according to any one of claims 1 to 10.
